Europäisches Patentamt

European Patent Office

Office européen des brevets

(19)

(11) Publication number: 0 269 855
A2

## (12) EUROPEAN PATENT APPLICATION

(21) Application number: 87115773.1

(22) Date of filing: 27.10.87

(51) Int. Cl.4 H01M 10/36

(30) Priority: 01.12.86 US 936297

(43) Date of publication of application:
08.06.88 Bulletin 88/23

(84) Designated Contracting States:
DE FR GB

(71) Applicant: GTE LABORATORIES
INCORPORATED
1209 Orange Street
Wilmington Delaware 19801(US)

(72) Inventor: Dampier, Frederick W.
246 Sycamore Street
Watertown MA 02172(US)
Inventor: Mank, Richard M.
88 Morningside Path
E.Weymouth MA 02189(US)

(74) Representative: Patentanwälte Grünecker,
Kinkeldey, Stockmair & Partner
Maximilianstrasse 58
D-8000 München 22(DE)

(54) Rechargeable electrochemical cell.

(57) A rechargeable non-aqueous electrochemical cell having a negative electrode of lithium, a positive electrode including $MnO_2$, and an electrolytic solution of $SO_2$ and an electrolyte solute dissolved therein.

Fig.1.

86-3-071 EP                    -1-

## RECHARGEABLE ELECTROCHEMICAL CELL

This invention relates to electrochemical cells. More particularly, it is concerned with rechargeable non-aqueous electrochemical cells.

There have been recent developments in rechargeable electrochemical cells of the non-aqueous type which employ lithium or similar materials as the negative electrode material. These cells employ an inorganic electrolytic solution of sulfur dioxide ($SO_2$) together with a suitable solute. Various materials have been employed as the positive electrode material. The use of $CuCl_2$ and $CuBr_2$ as positive electrode materials is disclosed in U.S. Patent No. 4,515,875 to Bowden and Dey. Patent No. 4,508,798 to Gopikanth, Kuo, and Bowden is directed to the use of $CoCl_2$ as the positive electrode material. Patent No. 4,508,799 to Gopikanth and Kuo, and Patent No. 4,508,800 to Gopikanth, Kuo, and Schlaikjer are directed to the use of $NiCl_2$ and $FeBr_3$, respectively.

A rechargeable non-aqueous electrochemical cell having improved performance characteristics and improved weight and volume to energy relationships in accordance with the present invention comprises a negative electrode including an alkali or alkaline earth metal, a positive electrode including manganese dioxide ($MnO_2$), and an inorganic electrolytic solution in contact with the negative electrode and positive electrode comprising sulfur dioxide ($SO_2$) and an inorganic electrolyte solute dissolved therein.

In the drawings:
FIG. 1 is a graph of the depth of discharge achieved as a function of the number of discharging-charging cycles of a rechargeable electrochemical cell in accordance with the present invention;

86-3-071 EP                    -2-

FIG. 2 is a graph illustrating the discharge behavior for certain cycles of the cell of Fig. 1;

FIG. 3 is a graph of the depth of discharge achieved as a function of the number of discharging-charging cycles of a control cell for comparison with the cell of Figs. 1 and 2; and

FIG. 4 is a graph of the discharge behavior for a single discharge of the control cell of Fig. 3.

For a better understanding of the present invention, together with other and further objects, advantages, and capabilities thereof, reference is made to the following discussion and appended claims in connection with the above-described drawings.

Rechargeable electrochemical cells in accordance with the present invention have an alkali or alkaline earth metal negative electrode, preferably lithium, including mixtures and alloys thereof; an electrolytic solution comprising sulfur dioxide ($SO_2$) and an electrolyte salt soluble in $SO_2$; and a positive electrode comprising manganese dioxide ($MnO_2$).

Preferably, the $MnO_2$ positive electrode is made from a mixture of $MnO_2$ and conductive carbonaceous material, such as graphite or carbon black, together with a suitable binder, such as polyethylene. These materials in the form of fine powders are well mixed and then compressed onto a conductive grid or screen. The preferred percentage of $MnO_2$ is between 60% and 90% by weight, with the conductive carbonaceous material being between 30% and 5% by weight, and with the binder being about 10% by weight. The $MnO_2$ employed in the positive electrodes of cells in accordance with the present invention is of the $\alpha$, $\beta$, $\gamma$, or $\rho$ crystallogrpahic structure. The most satisfactory form of $MnO_2$ appear to be the $\beta$ phase of electroactive $MnO_2$.

The lithium negative electrodes and/or the $MnO_2$ positive electrodes desirably may be individually sealed

86-3-071 EP                    -3-

within sheets of microporous fluorocarbon polymers. Separators made from nonwoven glass fibers, alumina, or other inert materials may be used alone or in combination with microporous separators. The combination of microporous and porous separators serves to improve cycling performance by reducing the mechanical stresses on the microporous separators caused by swelling of the positive electrode during cell operation or by mechanical abuse during cell assembly.

The totally inorganic electrolyte used in the cell consists of liquid sulfur dioxide ($SO_2$) and an inorganic electrolyte salt, no organic cosolvents are employed. The electrolyte solute may be an alkali or alkaline earth metal clovoborate salt or an alkali or alkaline earth metal halide salt. More specifically, $LiGaCl_4$ is a preferred solute although other salts, for example, $LiAlCl_4$, $Li_2B_{10}Cl_{10}$, and $Li_2B_{12}Cl_{12}$ or mixtures thereof may be employed, provided that they are soluble in the $SO_2$ without requiring any organic cosolvents.

The following examples are for the purpose of further illustrating and explaining the present invention, and are not to be taken as limiting the scope thereof.

## EXAMPLE I

Positive electrodes were made by pressing a thoroughly mixed blend of 60.13% by weight $MnO_2$, 29.52% by weight graphite, and 10.35% by weight polyethylene powders onto a 2.0 cm x 3.0 cm expanded nickel grid. The $MnO_2$ was a β phase $MnO_2$ from Chemetals Incorporated, Glen Burnie, Maryland, designated as VHP. This material was produced for use in manufacturing electrical components other than electrochemical cells, and was not intended for nor necessarily optimum for use in electrochemical cells. The mixture of powders was pressed at a pressure of 5400 psi at a temperature of 99°C for 5 minutes to form positive electrodes 0.91 mm thick. The theoretical capacity of

86-3-071 EP                    -4-

the $MnO_2$ positive electrode was 156 mAhr based on a 1.0 electron/$MnO_2$ reduction. Negative electrodes were made by pressing two sheets of 0.38 mm lithium foil onto both sides of a 2.0 cm x 3.0 cm expanded nickel grid to form negative electrodes 0.81 mm thick. The theoretical capacity of a pair of lithium negative electrodes was 2.15 Ahr. Cells were assembled by wrapping an $MnO_2$ positive electrode in four layers of 0.13 mm thick non-woven glass fiber separator paper, and sandwiching the wrapped positive electrode between two of the lithium negative electrodes. The cell was filled with 22 grams of an electrolytic solution of approximately 1.0 M $LiGaCl_4$ in $SO_2$.

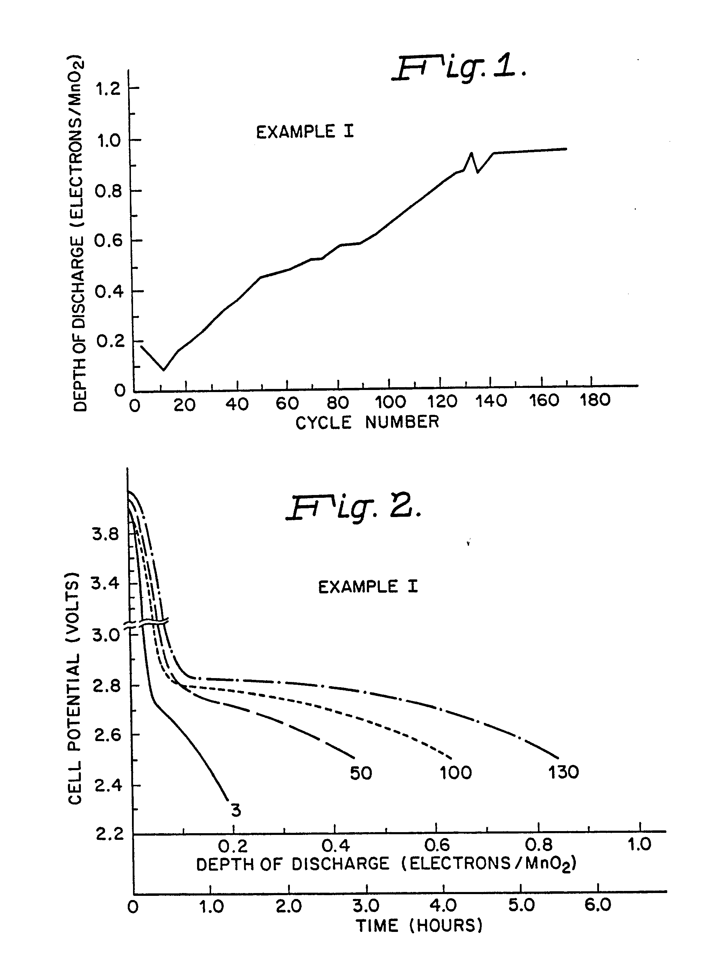

The open circuit potential of the cell was 3.815 volts after storage for 24 hours at about 23°C. The cell was discharged at 2.0 mA/cm$^2$ (24 mA total cell current) and charged at a current of 1.0 mA/cm$^2$ for cycles 1 through 12, at 0.67 mA/cm$^2$ for cycles 13 through 27, and from cycles 28 through 139 the charging current density was increased from 0.50 mA/cm$^2$ to 0.83 mA/cm$^2$. The cell was charged to an upper potential limit of 4.20 volts for cycles 1 through 5, to 4.30 volts for cycles 5 through 12, to 4.40 volts for cycles 13 to 98, and to 4.26 volts for cycles 98 through 138. After the upper potential limit was reached during the charging portion of each cycle, the cell was charged potentiostatically at that potential for a preset total charge time. The total preset charge time was 13.17 hours for cycles 1 through 17 and 11.0 hours for cycles 18 through 27. The charge time was increased gradually to 22 hours for cycle 98. The discharge depth was controlled by stopping the discharge when a preset lower potential limit was reached. The discharge potential cut-off was 2.35 volts for cycles 1 through 12, 2.40 volts for cycles 13 through 27, 2.45 volts for cycles 28 through 38, and 2.50 volts for cycles 29 through 139. Fig. 1 depicts the depth of discharge achieved at 2.0

86-3-071 EP                    -5-

$mA/cm^2$ discharge current from cycle 1 through cycle 172. Fig. 2 depicts the behavior of the cell potential during discharge at a temperature of about 23°C for cycles 3, 50, 100, and 130.

## EXAMPLE II

For comparative purposes an electrochemical cell was constructed employing a graphite positive electrode. The graphite positive electrode was fabricated by pressing a thoroughly mixed blend of 79.92% by weight graphite and 20.08% polyethylene powders onto a 2.0 cm x 3.0 cm expanded nickel grid. The mixture was pressed on the grid at a pressure of 5400 psi at a temperature of 99°C for 5 minutes to form an electrode 1.1 mm thick. The positive electrode contained 0.5962 grams of graphite and would have a theoretical capacity of 1.3305 Ahr for a 1 electron reduction per carbon atom. The graphite positive electrode was wrapped in three layers of 0.13 mm thick nonwoven glass fiber separator paper and sandwiched between 2.0 cm x 3.0 cm lithium negative electrodes, each about 0.81 mm thick. The lithium negative electrodes were fabricated as described in Example I and had a theoretical capacity of 2.55 Ahr. The cell was filled with 19.5 grams of an electrolytic solution of approximately 1.0M $LiGaCl_4$ in $SO_2$.

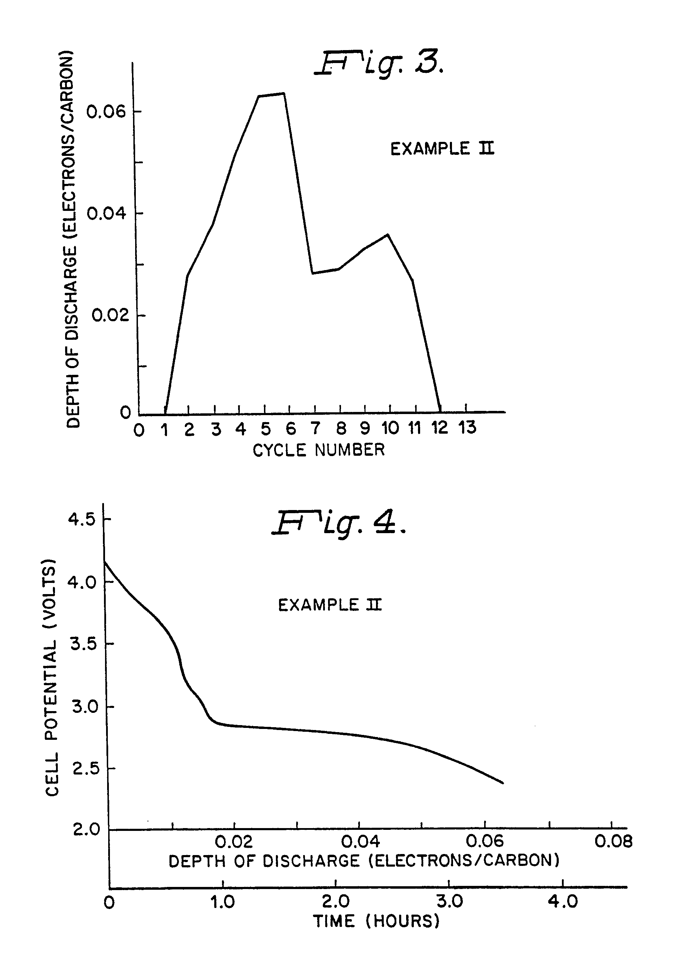

The open circuit potential of the cell was 3.12 volts at about 23°C. The cell was discharged at 2.0 $mA/cm^2$ (24 mA total cell current) to a 2.35 volt cut-off potential except for cycle 8 which was at 1.0 $mA/cm^2$. The charging current was 0.83 $mA/cm^2$ with a 4.40 volt upper limit. However, during charging the cell potential did not exceed 4.25 volts and the charge limit was set for periods ranging from 10 to 20 hours. Fig. 3 depicts the depth of discharge achieved for the graphite electrode cell for cycles 1 through 12. Fig. 4 depicts the behavior of the cell potential during the discharge portion of

86-3-071 EP                    -6-

cycle 4 at a discharge current of 2.0 mA/cm$^2$ and a temperature of 23°C.

The greatest capacity obtained for the lithium/graphite cell of Example II was 83.74 mAhr (140 mAhr/gram graphite) on the discharge portion of cycle 5. Thus, since the $MnO_2$ electrode in the $Li/MnO_2$ cell of Example I contained 0.2489 grams of graphite, in principle it could be expected to deliver a maximum 34.85 mAhr to a 2.35 volts cut-off at 2.0 mA/cm$^2$, based on reduction of $SO_2$ at the graphite. The $Li/MnO_2$ cell of Example I, however, delivered up to 144 mAhr to a 2.58 volt cut-off potential. Therefore, the $MnO_2$ and not the graphite was the primary active material in the cell of Example I, since graphite does not cycle more than 12 cycles and could not account for more than 24% of the observed capacity in Example I.

Rechargeable $Li/MnO_2$ electrochemical cells in accordance with the present invention offer improved gravimetric energy density, lower cost, reduced sensitivity to water contamination, and other advantages over previously known rechargeable lithium electrochemical cells. The improvement in gravimetric energy density is due to the low molecular weight of $MnO_2$ and also to its high discharge potential. The theoretical gravimetric energy density of the $Li/MnO_2$ cell is 796 Whr/lb based on a 2.0 electron/$MnO_2$ reduction and an experimental open circuit potential of 3.43 volts. By comparison, the theoretical gravimetric energy density of the $Li/CuCl_2$ cell is 592 Whr/lb based on a 2.0 electron/$CuCl_2$ reduction. Since $MnO_2$ is insoluble in water, the positive electrodes can be fabricated using less expensive techniques without the necessity for special precautions to avoid reactions with water and oxygen. In addition, $MnO_2$ has a higher electrical conductivity during discharge than copper and most other metal halide salts. The high cycle life as observed for cells in accordance with the

86-3-071 EP                    -7-

present invention may be caused by uniform current distribution which is a result of the relatively high solid state electrical conductivity of $MnO_2$. The uniform current density of $MnO_2$ serves to suppress lithium dendrite formation during extended cycling and thus increase the cell cycle life.

While there has been shown and described what is considered to be a preferred embodiment of the present invention, it will be obvious to those skilled in the art that various changes and modifications may be made therein without departing from the invention as defined by the appended claims.

86-3-071 EP                    -1-

<u>CLAIMS:</u>

1.  A rechargeable non-aqueous electrochemical cell comprising

      a negative electrode including an alkali or alkaline earth metal;

      a positive electrode including $MnO_2$; and

      an inorganic electrolytic solution in contact with the negative electrode and positive electrode comprising $SO_2$ and an electrolyte solute dissolved therein.

2.  A rechargeable non-aqueous electrochemical cell in accordance with claim 1 wherein

      said $MnO_2$ is of an $\alpha$, $\beta$, $\gamma$, or $\rho$ crystallographic structure.

3.  A rechargeable non-aqueous electrochemical cell in accordance with claim 2 wherein

      said electrolytic solution consists essentially of an electrolyte solute selected from the group consisting of alkali and alkaline earth metal clovoborate salts and alkali and alkaline earth metal halide salts dissolved in $SO_2$.

4.  A rechargeable non-aqueous electrochemical cell in accordance with claim 3 wherein

      negative electrode includes lithium metal.

5.  A rechargeable non-aqueous electrochemical cell in accordance with claim 1 wherein

      said positive electrode comprises a mixture of $MnO_2$ and conductive carbonaceous material.

86-3-071 EP                    -2-

6.  A rechargeable non-aqueous electrochemical cell in accordance with claim 5 wherein

said $MnO_2$ is of an α , β, γ , or ρ crystallographic structure.

7.  A rechargeable non-aqueous electrochemical cell in accordance with claim 6 wherein

said $MnO_2$ constitutes from 60 to 90 percent by weight of said mixture.

8.  A rechargeable non-aqueous electrochemical cell in accordance with claim 7 wherein

negative electrode includes lithium metal.

9.  A rechargeable non-aqueous electrochemical cell in accordance with claim 8 wherein

said electrolytic solution consists essentially of an electrolyte solute selected from the group consisting of alkali and alkaline earth metal clovoborate salts and alkali and alkaline earth metal halide salts dissolved in $SO_2$.

10.  A rechargeable non-aqueous electrochemical cell in accordance with claim 9 wherein

said $MnO_2$ is of β crystallographic structure.

11.  A rechargeable non-aqueous electrochemical cell in accordance with claim 10 wherein

said electrolytic solution consists essentially of $LiAlCl_4$ or $LiGaCl_4$ dissolved in $SO_2$.

12.  A rechargeable non-aqueous electrochemical cell in accordance with claim 11 wherein

said electrolytic solution consists essentially of $LiGaCl_4$ dissolved in $SO_2$.

0 269 855

Fig.1.

EXAMPLE I

Fig. 2.

EXAMPLE I

0 269 855

Fig. 3.

EXAMPLE II

Fig. 4.

EXAMPLE II